# EUROPEAN PATENT APPLICATION

(11) **EP 2 832 699 A1**
(43) Date of publication of application: **04.02.2015**
(21) Application number: 13769693.6
(22) Date of filing: 28.03.2013
(51) Int. Cl.: C01G 19/02, C01G 19/00, C01G 30/00, C08J 5/18

(54) **INFRARED CUT MATERIAL**

(30) Priority: 29.03.2012 JP 2012076045
(71) Applicant: Mitsubishi Materials Corporation, Chiyoda-ku Tokyo 100-8117 (JP); Mitsubishi Materials Electronic Chemicals Co., Ltd., Akita-shi Akita 010-8585 (JP)
(72) Inventor: YOSHIZUMI Motohiko, Akita-shi Akita 010-8585 (JP); NAKABAYASHI Akira, Akita-shi Akita 010-8585 (JP)
(74) Representative: Gille Hrabal
(86) International application number: PCT/JP2013/059280
(87) International publication number: WO 2013/147033

(57) **Abstract**

An infrared-ray cutoff material which is an infrared-ray cutoff material including an antimony tin oxide powder and characterized in that a content of SbO₂ is not less than 13 parts by mass and not more than 30 parts by mass with respect to 100 parts by mass of the infrared-ray cutoff material, and also a half width (diffraction angle 2θ: 52°) of a (211) plane of the antimony tin oxide powder in an X-ray diffraction pattern is not less than 0.8° and not more than 1.2°.

## Description

### TECHNICAL FIELD

The present invention relates to an infrared-ray cutoff material used for forming a transparent infrared-ray cutoff film (a film transparent to visible light and absorbs and/or reflects light having a wavelength at least as long as near-infrared).

Priority is claimed on Japanese Patent Application No. 2012-076045, filed March 29, 2012, the content of which is incorporated herein by reference.

### BACKGROUND ART

Conventionally, the use of an indium tin oxide powder (hereafter, referred to as an ITO powder) or an antimony tin oxide powder (hereafter, referred to as an ATO powder) as an infrared-ray cutoff material has been known. Here, although the ITO powders have advantages of excellent transparency and infrared-ray cutting performance, not only they are expensive and lead to high cost, but also there is a problem of the use of rare metals. On the other hand, although the ATO powders are inexpensive as compared to the ITO powders, there are problems not only of low visible light transmittance which makes it impossible to cope with the demand for high transparency, but also of the near-infrared-ray cutting performance being inferior to that of the ITO powders (Patent Document 1). For example, the ATO powder (Product Name: T-1) manufactured by Mitsubishi Materials Electronic Chemicals Co., Ltd. which is well known as an ATO powder has an IR shielding rate (visible light transmittance (% Tv) / solar radiation transmittance (% Ts)) of about 1.2 at the visible light transmittance of 80%. Although fluorine-doped tin oxide powders (FTO powders) also exhibit near-infrared absorption, the IR shielding rate is as low as about 1.2. In addition, the infrared-ray cutoff materials such as lanthanum boride and tungsten-based compounds absorb visible light, and there is also a problem of poor absorption capacity for near infrared.

### [Prior art documents]

### [Patent documents]

[Patent Document 1] Japanese Unexamined Patent Application, First Publication No. H7-69632

### DISCLOSURE OF INVENTION

### [Problems to be Solved by the Invention]

In the present invention, the above problems are solved by using an ATO powder doped with a larger amount of SbO₂ than the conventional ATO powders that contain from 5 to 10% by mass of SbO₂, and also having specific crystallinity as an infrared-ray cutoff material. That is, the aim thereof is to provide an infrared-ray cutoff material capable of forming a transparent infrared-ray cutoff film that is inexpensive and has high transparency, has a cutting performance for the near-infrared-ray of a wavelength of at least 2,000 nm which is equivalent to that of a film using an ITO powder, and has a higher IR shielding rate than that of the conventional ATO powders.

### [Means to Solve the Problems]

The present invention relates to an infrared-ray cutoff material and a transparent infrared-ray cutoff film that solved the above problems by having the following configurations.
[1] An infrared-ray cutoff material which is an infrared-ray cutoff material including an antimony tin oxide powder and characterized in that a content of SbO₂ is not less than 13 parts by mass and not more than 30 parts by mass with respect to 100 parts by mass of the infrared-ray cutoff material, and also a half width (diffraction angle 2θ: 52°) of a (211) plane of the antimony tin oxide powder in an X-ray diffraction pattern is not less than 0.8° and not more than 1.2°.
[2] A dispersion including the infrared-ray cutoff material according to the above aspect [1] and a solvent.
[3] A composition for a transparent infrared-ray cutoff film, the composition including the infrared-ray cutoff material according to the above aspect [1], a resin, and a solvent.
[4] A transparent infrared-ray cutoff film including the infrared-ray cutoff material according to the above aspect [1], and a resin.
[5] The transparent infrared-ray cutoff film according to the above aspect [4], in which from 65 to 80 parts by mass of the infrared-ray cutoff material is contained with respect to a total of 100 parts by mass of the infrared-ray cutoff material and the resin, a thickness is from 1 to 3 µm, and a ratio of a visible light transmittance (% Tv) to a solar radiation transmittance (% Ts) ([(% Tv) / (% Ts)]) at a visible light transmittance (% Tv) of 80% is at least 1.26.

### [Effects of the Invention]

According to the aspect [1] of the present invention, it is possible to provide an infrared-ray cutoff material that has high transparency and excellent infrared-ray cutting performance, and is also inexpensive. Therefore, it is possible to form a transparent infrared-ray cutoff film that is highly transparent and excellent in the infrared-ray cutting performance.

According to the aspect [2] or [3] of the present invention, it is possible to easily form a transparent infrared-ray cutoff film that is highly transparent and is excellent in the infrared-ray cutting performance. In addition, according to the aspect [4] of the present invention, it is possible to provide a transparent infrared-ray cutoff film that is highly transparent and is excellent in the infrared-ray cutting performance.

### BRIEF DESCRIPTION OF THE DRAWINGS

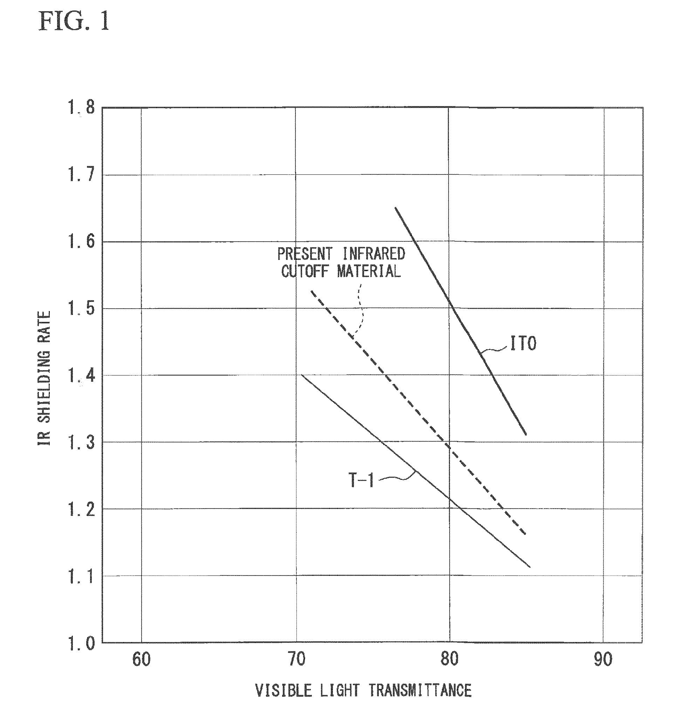

FIG 1 is a graph showing the relationships of the IR shielding rates and visible light transmittances of the infrared-ray cutoff material of the present invention, an ITO powder and a commercially available ATO powder.

### BEST MODE FOR CARRYING OUT THE INVENTION

As follows is a more detailed description of the present invention based on embodiments of the present invention. It should be noted that the symbol "%" refers to "% by mass", unless indicated otherwise, and except those cases where it is specific to the numerical value.

### [Infrared-ray cutoff material]

An infrared-ray cutoff material of the present embodiment (hereafter, referred to as a "present infrared-ray cutoff material") is an infrared-ray cutoff material composed of an antimony tin oxide powder (ATO powder) in which an SbO₂ content is not less than 13 parts by mass and not more than 30 parts by mass with respect to 100 parts by mass of the present infrared-ray cutoff material, and also a half width (diffraction angle 2θ: 52°) of a (211) plane of the present infrared-ray cutoff material in an X-ray diffraction pattern is not less than 0.8° and not more than 1.2°. In the present embodiment, oxides of Sb will be described as SbO₂. In the infrared-ray cutoff materials, the Sb content was measured by ICP analysis and converted to SbO₂.

The inventors of the present invention found that in order to enhance the IR shielding rate of the ATO powders, it is important that SbO₂ is doped in a larger amount than in normal ATO powders, and also that the crystallinity of the ATO powder is within a specific range. In addition, the inventors of the present invention also discovered that the crystallinity of the ATO powder increases although the IR shielding rate reduces in the ATO powder with a low SbO₂ content, whereas the crystallinity of the ATO powder reduces and the IR shielding rate also declines in the ATO powder with a high SbO₂ content.

That is, in the present embodiment, the following configurations are adopted in order to enhance the IR shielding rate of the ATO powder.

With respect to 100 parts by mass of the present infrared-ray cutoff material, the SbO₂ content is not less than 13 parts by mass and not more than 30 parts by mass, and preferably not less than 13 parts by mass and not more than 20 parts by mass. Further, the half width (diffraction angle 2θ: 52°) of the (211) plane of the ATO powder in the X-ray diffraction pattern of the present infrared-ray cutoff material is not less than 0.8° and not more than 1.2°, preferably not less than 0.8° and not more than 1.1 °, and more preferably not less than 0.8° and not more than 1.0°. If the SbO₂ content and the crystallinity of the ATO powder are outside these ranges, the IR shielding rate would be smaller than 1.26 at a visible light transmittance (% Tv) of 80% when a transparent infrared-ray cutoff film having a thickness of 1 to 3 um is formed using the present infrared-ray cutoff material by the method to be described later. Here, the IR shielding rate is a ratio of the visible light transmittance (% Tv) to the solar radiation transmittance (% Ts) (that is, [(% Tv) / (% Ts)]). Outside the ranges described above, because both the visible light transmittance (% Tv) and the solar radiation transmittance (% Ts) decline in parallel even if the thickness of the transparent infrared-ray cutoff film is increased, the IR shielding rate never exceeds 1.26. It should be noted than when the IR shielding rate is smaller than 1.26, it is practically impossible to use in many cases.

Since the ATO powder constituting the infrared-ray cutoff material has a configuration in which SbO₂ is doped to SnO₂, an X-ray diffraction pattern of the ATO powder is the same as the X-ray pattern of SnO₂. Here, the X-ray diffraction pattern is obtained, in the X-ray diffraction measurement, by scanning the incident angle 6 in a predetermined angle range while irradiating X-rays (CuKα ray) onto a sample, counting the intensity of diffracting X-rays during this period, and plotting the diffraction angle 2θ on the horizontal axis and the diffraction intensity on the vertical axis. Based on the crystal structure of SnO₂ and the wavelength of the irradiated X-ray, the (211) plane of SnO₂ corresponding to a diffraction angle 2θ is observed at 52°, and it is also observed at 52° in a diffraction angle 20 of the ATO powder.

It should be noted that a "peak" refers to a mountain-like portion in the X-ray diffraction pattern. The individual peaks correspond to the crystal plane. A "half width" indicates a diffraction angle width of a peak curve at an X-ray diffraction intensity which is 1/2 of the intensity of the peak (X-ray diffraction intensity at the vertex of the peak curve). A peak with a small half width will become a steep mountain-like shape, which indicates a high crystallinity for the corresponding crystal plane. On the other hand, a peak with a large half width will become a gentle mountain-like shape that widens toward the bottom, which indicates a low crystallinity for the corresponding crystal plane.

As described above, the present infrared-ray cutoff material has a half width (diffraction angle 2θ: 52°) of the (211) plane of the ATO powder in the X-ray diffraction pattern of 0.8° or more to 1.2° or less, and a crystallinity within a specific range. If the half width (diffraction angle 2θ: 52°) of the (211) plane of the ATO powder is less than 0.8°, the crystallinity would be too high, and the IR shielding rate would be reduced. On the other hand, when the half width (diffraction angle 2θ: 52°) of the (211) plane of the ATO powder exceeds 1.2°, the crystallinity would be too low, and the IR shielding rate would be reduced.

The visible light transmittance (% Tv) is a value (wavelength range of visible light: 380 to 789 nm) which is determined based on JIS R3106 (established in 1998).

In other words, the visible light transmittance (% Tv) is, with respect to the luminous flux of daylight which is vertically incident on the infrared-ray cutoff film, determined as a ratio of the transmitted light flux to the incident light flux. Here, the term "daylight" refers to the CIE daylight defined by International Commission on Illumination (C1E). In addition, a light flux (luminous flux) refers to one which is obtained by integrating, with respect to the wavelength, the value of the product of the radiant flux (radiant energy flux) and the luminosity value for each wavelength of the radiation. In the present embodiment, the visible light transmittance (% Tv) was measured using a spectrophotometer.

The solar radiation transmittance (% Ts) is a value (wavelength range of solar radiation: 300 to 2,500 nm) which is determined based on JIS R3106 (established in 1998).

In other words, the solar radiation transmittance (% Ts) is, with respect to the radiant flux of solar radiation which is vertically incident on the infrared-ray cutoff film, determined as a ratio of the transmitted radiant flux to the incident radiant flux. Here, the solar radiation refers to direct solar radiation, that is, the radiation that passes through the atmosphere and reaches directly to the ground in the wavelength range of near ultraviolet, visible and near infrared (300 to 2,500 nm described above). In the present embodiment, the solar radiation transmittance (% Ts) was measured using a spectrophotometer.

It should be noted that JIS R3106 (established in 1998) which shows the visible light transmittance (% Tv) and the solar radiation transmittance (% Ts) is a standard created without changing the technical content of ISO 9050 (Glass in building-Determination of light transmittance, solar direct transmittance, total solar energy transmittance and ultraviolet transmittance, and related glazing factors) which was published as the first edition in 1990, and thus it is also possible to refer to ISO 9050.

The particle diameter of the present infrared-ray cutoff material is not particularly limited, although it is preferably from 0.005 to 0.03 µm and more preferably from 0.01 to 0.02 µm from the viewpoints of the visible light transmittance and solar radiation transmittance. Here, the particle diameter refers to a BET diameter converted from the specific surface area. Further, the shape of the present infrared-ray cutoff material is preferably granular.

The present infrared-ray cutoff material can be produced by co-precipitating the hydroxides of antimony and tin from an aqueous solution containing antimony and tin, followed by firing of the hydroxides of antimony and tin.

Examples of the methods of co-precipitating the hydroxides of antimony and tin from an aqueous solution containing antimony and tin include general methods, such as (1) a method of co-precipitating the hydroxides of antimony and tin by dropwise adding a mixed solution of a tin tetrachloride solution, hydrochloric acid and antimony chloride solution to an alkaline solution with stirring, (2) a method of co-precipitating the hydroxides of antimony and tin by dropwise adding each of the tin tetrachloride solution and antimony chloride solution at the same time to an alkaline solution with stirring, and (3) a method of co-precipitating the hydroxides of antimony and tin by dropwise adding a mixed solution of an alkaline solution, tin tetrachloride solution, hydrochloric acid and antimony chloride solution into water with stirring. It is possible to control the primary particle size of the resulting co-precipitates through the type of method selected, the rate of dropwise addition in each method, and the like, but in order to obtain a uniform infrared-ray cutoff material, a method using the co-precipitation method (3) is preferred.

As described above, co-precipitation of the hydroxides of antimony of tin is caused by a hydrolysis reaction or the like, but in order to obtain an antimony tin oxide powder in which an SbO₂ content is not less than 13 parts by mass and not more than 30 parts by mass relative to 100 parts by mass of the present infrared-ray cutoff material and also having a desired crystallinity, it is preferable to heat a predetermined amount of an aqueous solution containing antimony and tin to 40 to 70°C so as to accelerate the hydrolysis reaction or the like.

If firing of the hydroxides of antimony of tin is carried out in the atmosphere at 750 to 850°C for 0.5 to 3 hours, and also the SbO₂ content is not less than 13 parts by mass and not more than 30 parts by mass, relative to 100 parts by mass of the present infrared-ray cutoff material obtained by firing, the half width (diffraction angle 2θ: 52°) of the (211) plane of the ATO powder in the X-ray diffraction pattern would be not less than 0.8° and not more than 1.2°. Furthermore, the IR shielding rate of the transparent infrared-ray cutoff film to be described later using the present infrared-ray cutoff material at a visible light transmittance of 80% becomes 1.26 or more.

If the SbO₂ content is not less than 13 parts by mass and not more than 30 parts by mass, relative to 100 parts by mass of the present infrared-ray cutoff material, and the firing temperature is lower than 750°C, the half width (diffraction angle 20: 52°) of the (211) plane of the ATO powder would be greater than 1.2°, and the crystallinity of the ATO powder would be low, and thus the IR shielding rate of the ATO powder would also be smaller than 1.26. On the other hand, if the SbO₂ content is not less than 13 parts by mass and not more than 30 parts by mass, relative to 100 parts by mass of the infrared-ray cutoff material, and the firing temperature is higher than 850°C, the half width (diffraction angle 2θ: 52°) of the (211) plane of the infrared-ray cutoff material would be smaller than 0.8°, and although the crystallinity of the ATO powder would be high, the IR shielding rate of the infrared-ray cutoff material would be smaller than 1.26.

### [Dispersion]

A dispersion of the present embodiment contains the present infrared-ray cutoff material and a solvent. Examples of the solvent include water, toluene, xylene, acetone and ethanol.

### [Composition for a transparent infrared-ray cutoff film]

A composition for a transparent infrared-ray cutoff film according to the present embodiment contains the present infrared-ray cutoff material, a resin and a solvent. The solvent is as described above. Here, as for the resin, as long as it is possible to be dissolved in a solvent used, to disperse the present infrared-ray cutoff material, and to form a transparent infrared-ray cutoff film by binding the present infrared-ray cutoff material, any resin which is generally used in dispersions, coating materials, pastes and the like can be used. Here, examples of the resin include acrylic resins, polyethylene terephthalate resins and urethane resins. In addition, acrylic coatings, polyester coatings, urethane coatings and the like in which the resin solid content and the solvent are mixed in advance are also suitably used. Examples of the commercial products include ACRYLIC manufactured by Kansai Paint Co., Ltd., and ACRYDIC manufactured by DIC Corporation.

### [Transparent infrared-ray cutoff film]

A transparent infrared-ray cutoff film of the present embodiment (hereinafter, referred to as the present transparent infrared-ray cutoff film)) contains the present infrared-ray cutoff material and a resin. Further, in the case of a transparent infrared-ray cutoff film having a thickness of 1 to 3 µm and contains from 65 to 80 parts by mass of the present infrared-ray cutoff material with respect to a total of 100 parts by mass of the present infrared-ray cutoff material and the resin, it is possible to make the ratio of the visible light transmittance (% Tv) to the solar radiation transmittance (% Ts) ([(% Tv) / (% Ts)]), that is, the IR shielding rate, of the transparent infrared-ray cutoff film at a visible light transmittance (% Tv) of 80%, equal to or larger than 1.26. In the present embodiment, the upper limit of the IR shielding rate is not particularly limited, although the IR shielding rate can be improved to about 1.30.

If the content of the infrared-ray cutoff material is less than 65% by mass or the film thickness of the present transparent infrared-ray cutoff film is less than 1 µm, the IR shielding rate would be less than 1.26. In addition, if the content of the infrared-ray cutoff material is greater than 80% by mass or the film thickness of the present transparent infrared-ray cutoff film is thicker than 3 µm, the visible light transmittance would be 75% or less, which would limit the usage.

It should be noted that the IR shielding rate represents the infrared-ray cutting performance, and is more or less at the following levels in the standard mode.
(1) A tin oxide powder-containing film has a solar radiation transmittance (% Ts) as high as around 81 % when having a transparency indicated by the visible light transmittance (% Tv) of around 84%, and therefore, the IR shielding rate is as low as about 1.0.
(2) A general ATO powder-containing film has a solar radiation transmittance (% Ts) of around 65% when having a transparency indicated by the visible light transmittance (% Tv) of around 80%, and therefore, the IR shielding rate is about 1.2, and the IR shielding rate is higher than that of those containing a tin oxide powder.
(3) An ITO powder-containing film has, when the content thereof is comparable to those of the tin oxide powder and general ATO powder described above in (1) and (2), a visible light transmittance (% Tv) of around 90%, excellent transparency, and also a solar radiation transmittance (% Ts) of as low as 59%, and therefore, the IR shielding rate is as high as 1.4 or more.

On the other hand, in the present transparent infrared-ray cutoff film containing the present infrared-ray cutoff material, the infrared-ray cutoff material is doped with a larger amount of antimony than in conventional ATO powders, the SbO₂ content is not less than 13 parts by mass and not more than 30 parts by mass with respect to 100 parts by mass of the present infrared-ray cutoff material, and also a half width (diffraction angle 2θ: 52°) of the (211) plane of the ATO powder in the X-ray diffraction pattern is not less than 0.8° and not more than 1.2°.

If an infrared-ray cutoff material having such a configuration is used, even without the use of expensive indium, it is possible to form an infrared-ray cutoff film having a solar radiation transmittance (% Ts) as low as less than 64% at a visible light transmittance (% Tv) of 80%, and thus the IR shielding rate is at least 1.26.

For reference, FIG. 1 shows a graph illustrating the relationships of the IR shielding rates and visible light transmittances of the present infrared-ray cutoff material, an ITO powder (referred to as "ITO" in FIG 1) and a commercially available ATO powder (Product Name: T-1, and referred to as "T-1" in FIG. 1) manufactured by Mitsubishi Materials Electronic Chemicals Co., Ltd. In the range shown in FIG. 1, the IR shielding rates and the visible light transmittances are in linear relationships. In addition, from FIG. 1, it can be seen that the present infrared-ray cutoff material has an IR shielding rate of at least 1.26 at a visible light transmittance of 80%.

A specific example of a method for producing a transparent infrared-ray cutoff film will be shown. First, a commercially available acrylic coating (Product Name: ACRYDIC, manufactured by DIC Corporation) is dissolved in toluene/xylene (volume ratio = 1:1), and an infrared-ray cutoff material is added thereto so as to adjust the content of the infrared-ray cutoff material in the coating film ([mass of the present infrared-ray cutoff material] / [mass of (the present infrared-ray cutoff material + resin)]) will be 70% by mass, thereby producing a dispersed composition for forming a transparent infrared-ray cutoff film. Then, the prepared composition for forming a transparent infrared-ray cutoff film is applied onto a PET film with a thickness-variable type applicator and dried at 100°C, thereby producing a transparent infrared-ray cutoff film having a thickness of 1 to 3 µm.

The present transparent infrared-ray cutoff film produced in this manner has an IR shielding rate ([(% Tv) / (% Ts)]) of at least 1.26 at a visible light transmittance (% Tv) of 80%.

### EXAMPLES

As follows is a more detailed description of the present invention based on a series of Examples, although the present invention is not limited to these Examples.

### [Production of infrared-ray cutoff material]

Infrared-ray cutoff materials were produced in the ratios shown in Tables 1 and 2. 92 g of a 55% by mass tin tetrachloride solution, 14 g of 17% by mass hydrochloric acid and a predetermined amount of an antimony trichloride solution were mixed and, together with a 25% by mass sodium hydroxide solution, added dropwise into 1 dm³ of water which was maintained at 60°C. The pH was kept from 5 to 6. Residual salts were removed from the obtained hydroxides of antimony and tin by decantation, and after filtration and drying, the resultant was fired in the atmosphere for 2 hours at 700 to 900°C.

### [Quantitative analysis of infrared-ray cutoff material]

The amounts of Sn and Sb in the obtained samples were measured by ICP analysis, and the mass of SbO₂ in parts by mass was calculated based on 100 parts by mass of the infrared-ray cutoff material. The results of the analyses in Examples 1 to 9 and Comparative Examples 1 to 26 are shown in Table 1 and Table 2.

### [X-ray diffraction measurement of infrared-ray cutoff material]

In addition, the X-ray diffraction measurements of the obtained sample were carried out with an X-ray diffractometer (model number: MiniFlex) manufactured by Rigaku Corporation. The X-ray diffraction measurement conditions were as follows.
X-ray source: CuKα
Tube voltage, tube current: 30 kV, 15 mA
Goniometer: Miniflex goniometer
Scattering slit: 4.2°
Receiving slit: 0.3 mm
Scanning speed: 1°/min

The half widths (diffraction angle 2θ: 52°) of the (211) planes of the ATO powders which were obtained in the X-ray diffraction measurements in Examples 1 to 9 and Comparative Examples 1 to 26 are shown in Table 1 and Table 2. in addition, the results describing the half width (diffraction angle 2θ: 52°) of the (211) plane of the ATO powder are shown in Table 3, while the mass of SbO₂ (in parts by mass) and the firing temperature are indicated in the vertical axis and the horizontal axis, respectively. Those inside the thick solid line in Table 3 correspond to the results in Examples 1 to 9, whereas those outside the thick solid line correspond to the results in Comparative Examples 1 to 26.

### [Preparation of a composition for a transparent infrared-ray cutoff film]

The obtained sample was added into a solution obtained by dissolving a commercially available acrylic coating (trade name: ACRYDIC, manufactured by DIC Corporation) in toluene/xylene (volume ratio = 1:1), and an infrared-ray cutoff material was prepared so that the content thereof in the coating film ([(mass of the infrared-ray cutoff material) / (mass of the infrared-ray cutoff material + resin content in the acrylic coating) at the time of drying the composition for forming a transparent infrared-ray cutoff film]) will be 70% by mass. The resultant was placed in a container where the beads were put and stirred for 10 hours with a paint shaker, thereby producing a composition for forming a transparent infrared-ray cutoff film.

### [Formation of transparent infrared-ray cutoff film]

The produced composition for forming a transparent infrared-ray cutoff film was applied onto a PET film with an applicator and dried at 100°C, thereby forming a transparent infrared-ray cutoff film having a thickness of 1 to 3 µm.

### [Evaluation of IR shielding rate]

With respect to the formed transparent infrared-ray cutoff film, using a spectrophotometer (model: U-4000) manufactured by Hitachi, the visible light transmittance (% Tv) and the solar radiation transmittance (% Ts) were measured by taking those ([% Tv], [% Ts]) of the atmosphere as baselines to calculate the IR shielding rate. Here, the IR shielding rate varies in accordance with the visible light transmittance. On the other hand, the visible light transmittance varies in accordance with the thickness of the transparent infrared-ray cutoff film. However, as shown in FIG 1, when the visible light transmittance was from 75 to 85%, since the visible light transmittance and the IR shielding rate were in a linear relationship and also the measured values of the visible light transmittance in Examples 1 to 9 and Comparative Examples 1 to 26 were from 75 to 85%, the IR shielding rate was evaluated at a visible light transmittance of 80% which was the median of the range. The results of the IR shielding rate at a visible light transmittance of 80% in Examples 1 to 9 and Comparative Examples 1 to 26 are shown in Tables 1 and 2. In addition, the results describing the IR shielding rate at a visible light transmittance of 80% are shown in Table 4, while the mass of SbO₂ (in parts by mass) and the firing temperature are indicated in the vertical axis and the horizontal axis, respectively. Those inside the thick solid line in Table 4 correspond to the results in Examples 1 to 9, whereas those outside the thick solid line correspond to the results in Comparative Examples 1 to 26.

**[Table 1]**

| | Parts by mass of SbO₂ | Firing temperature (°C) | Half width (°) of (211) plane of ATO powder | IR shlielding rate at visible light transmittance of 80% |
|---|---|---|---|---|
| Ex. 1 | 13 | 750 | 1.10 | 1.26 |
| Ex. 2 | 13 | 800 | 0.90 | 1.26 |
| Ex. 3 | 13 | 850 | 0.80 | 1.29 |
| Ex. 4 | 20 | 750 | 1.20 | 1.26 |
| Ex. 5 | 20 | 800 | 0.95 | 1.30 |
| Ex. 6 | 20 | 850 | 1.00 | 1.26 |
| Ex. 7 | 30 | 750 | 1.20 | 1.26 |
| Ex. 8 | 30 | 800 | 1.10 | 1.26 |
| Ex. 9 | 30 | 850 | 1.10 | 1.26 |

**[Table 2]**

| | Parts by mass of SbO₂ | Firing temperature (°C) | Half width (°) of ATO powder in (211) plane | IR shielding rate at visible light transmittance of 80% |
|---|---|---|---|---|
| Comp. Ex. 1 | 10 | 700 | 1.20 | 1.22 |
| Comp. Ex. 2 | 10 | 750 | 0.95 | 1.23 |
| Comp. Ex. 3 | 10 | 800 | 0.80 | 1.24 |
| Comp. Ex. 4 | 10 | 850 | 0.70 | 1.24 |
| Comp. Ex. 5 | 10 | 900 | 0.60 | 1.23 |
| Comp. Ex. 6 | 12 | 700 | 1.50 | 1.23 |
| Comp. Ex. 7 | 12 | 750 | 1.05 | 1.24 |
| Comp. Ex. 8 | 12 | 800 | 0.85 | 1.25 |
| Comp. Ex. 9 | 12 | 850 | 0.75 | 1.25 |
| Comp. Ex. 10 | 12 | 900 | 0.65 | 1.24 |
| Comp. Ex. 11 | 13 | 700 | 1.90 | 1.24 |
| Comp. Ex. 12 | 13 | 900 | 0.65 | 1.25 |
| Comp. Ex. 13 | 20 | 700 | 2.00 | 1.25 |
| Comp. Ex. 14 | 20 | 900 | 0.70 | 1.25 |
| Comp. Ex. 15 | 30 | 700 | 2.40 | 1.24 |
| Comp. Ex. 16 | 30 | 900 | 0.75 | 1.25 |
| Comp. Ex. 17 | 31 | 700 | 2.40 | 1.24 |
| Comp. Ex. 18 | 31 | 750 | 1.30 | 1.22 |
| Comp. Ex. 19 | 31 | 800 | 1.25 | 1.20 |
| Comp. Ex. 20 | 31 | 850 | 1.25 | 1.20 |
| Comp. Ex. 21 | 31 | 900 | 0.80 | 1.23 |
| Comp. Ex. 22 | 35 | 700 | 2.40 | 1.23 |
| Comp. Ex. 23 | 35 | 750 | 1.20 | 1.22 |
| Comp. Ex. 24 | 35 | 800 | 1.20 | 1.21 |
| Comp. Ex. 25 | 35 | 850 | 1.10 | 1.21 |
| Comp. Ex. 26 | 35 | 900 | 0.90 | 1.22 |

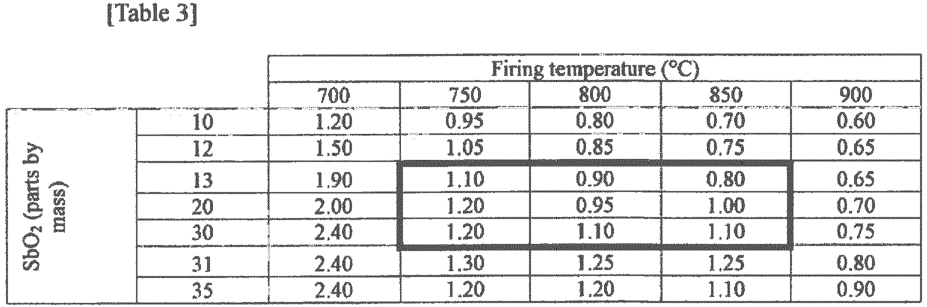

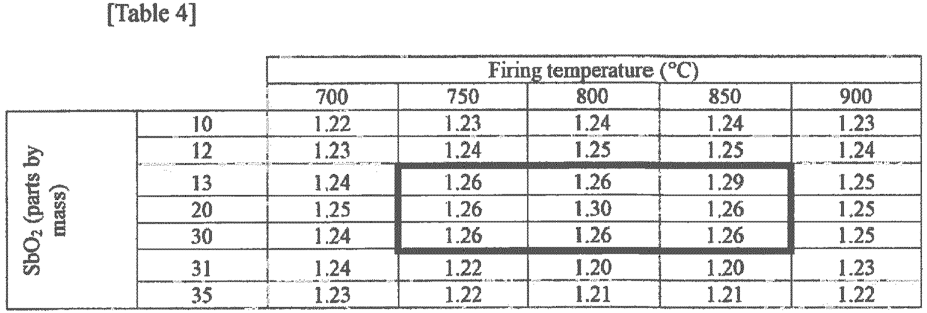

As shown in Table 1, Table 3 and Table 4, in Examples 1 to 9 where the SbO₂ content in the infrared-ray cutoff material was not less than 13 parts by mass and not more than 30 parts by mass and also the half width (diffraction angle 20: 52°) of the (211) plane of the ATO powder was not less than 0.8° and not more than 1.2°, the IR shielding rate [(% Tv) / (% Ts)] was 1.26 or more in a stable manner, which represented a favorable result. In addition, the transparency was favorable in Examples 1 to 9. On the other hand, as shown in Tables 2 to 4, in Comparative Examples 1 to 26 outside the range described above, the IR shielding rates were lower than 1.26. In Comparative Examples 4, 5, 9, 10, 12, 14, 16 and 2 1, the half width (diffraction angle 20: 52°) of the (211) plane of the ATO powder was too low, and the IR shielding rate was lower than 1.26. On the other hand, in Comparative Examples 6, 11, 13, 15, 17 to 20, and 22, the half width (diffraction angle 2θ: 52°) of the (211) plane of the ATO powder was too high, and the IR shielding rate was lower than 1.26. In addition, in Comparative Examples 1 to 3, 7 and 8, the half width (diffraction angle 20: 52°) of the (211) plane of the ATO powder was within the desired range, but since the amount of SbO₂ was small, the IR shielding rate was lower than 1.26. In Comparative Examples 23 to 26, the half width (diffraction angle 20: 52°) of the (211) plane of the ATO powder was within the desired range, but since the amount of SbO₂ was large, the IR shielding rate was lower than 1.26.

In the present invention, a larger amount of antimony is doped than in conventional ATO powders, the SbO₂ content is not less than 13 parts by mass and not more than 30 parts by mass with respect to 100 parts by mass of the present infrared-ray cutoff material, and also a half width (diffraction angle 2θ: 52°) of the (211) plane of the ATO powder in the X-ray diffraction pattern is not less than 0.8° and not more than 1.2°, as a result of which it is possible to provide an infrared-ray cutoff material capable of forming a transparent infrared-ray cutoff film that is inexpensive and highly transparent.

## Claims

1. An infrared-ray cutoff material comprising:
an antimony tin oxide powder, wherein
a content of SbO₂ is not less than 13 parts by mass and not more than 30 parts by mass with respect to 100 parts by mass of said infrared-ray cutoff material, and
a half width (diffraction angle 2θ: 52°) of a (211) plane of said antimony tin oxide powder in an X-ray diffraction pattern is not less than 0.8° and not more than 1.2°.

2. A dispersion comprising:
the infrared-ray cutoff material according to Claim 1; and
a solvent.

3. A composition for a transparent infrared-ray cutoff film, the composition comprising:
the infrared-ray cutoff material according to Claim 1;
a resin; and
a solvent.

4. A transparent infrared-ray cutoff film comprising:
the infrared-ray cutoff material according to Claim 1, and
a resin.

5. The transparent infrared-ray cutoff film according to Claim 4, wherein
from 65 to 80 parts by mass of the infrared-ray cutoff material is contained with respect to a total of 100 parts by mass of said infrared-ray cutoff material and the resin,
a thickness is from 1 to 3 µm, and
a ratio of a visible light transmittance (% Tv) to a solar radiation transmittance (% Ts) ([(% Tv) / (% Ts)]) at a visible light transmittance (% Tv) of 80% is at least 1.26.
